# EUROPÄISCHE PATENTSCHRIFT

(11) **EP 2 962 350 B1**
(45) Veröffentlichungstag und Bekanntmachung des Hinweises auf die Patenterteilung: **17.07.2019**
(21) Anmeldenummer: 14701222.3
(22) Anmeldetag: 24.01.2014
(51) Int. Cl.: H01M 8/04, H01M 8/24, H01M 8/10

(54) **BRENNSTOFFZELLENSYSTEM**
FUEL CELL SYSTEM
SYSTÈME DE PILES À COMBUSTIBLE

(30) Priorität: 27.02.2013 DE 102013203317
(43) Veröffentlichungstag der Anmeldung: 06.01.2016
(73) Patentinhaber: Bayerische Motoren Werke Aktiengesellschaft, 80809 München (DE)
(72) Erfinder: HAASE, Stefan, 85247 Schwabhausen (DE); HIEMER, Roman, 86971 (DE)
(86) Internationale Anmeldenummer: PCT/EP2014/051444
(87) Internationale Veröffentlichungsnummer: WO 2014/131561

(56) Entgegenhaltungen:
- WO-A1-2007/139059
- DE-A1- 10 337 898
- DE-A1-102004 013 256
- DE-A1-102007 052 149
- DE-A1-102011 080 237
- US-A1- 2010 248 058

## Beschreibung

Die vorliegende Erfindung betrifft ein Brennstoffzellensystem mit mehreren, zu einem Brennstoffzellenstapel zusammengefassten Einzel-Brennstoffzellen sowie zwei sich an die beiden endseitigen Einzel-Brennstoffzellen anschließenden Stromabnehmern, an welche sich jeweils direkt oder unter Zwischenlage einer Isolationsplatte eine Endplatte anschließt.

Einzel-Brennstoffzellen werden in der Regel in Reihe zu einem Brennstoffzellenstapel (vorliegend auch Stack genannt) geschaltet, um eine höhere elektrische Spannung zu erreichen. An jedem Ende eines Brennstoffzellenstapels befindet sich eine Endplatte, welche eine gleichmäßige Flächenpressung auf die Einzel-Brennstoffzellen ausüben bzw. diese zu einem Brennstoffzellenstapel verspannen und damit auch eine sichere Trennung der verschiedenen im Brennstoffzellenstapel geführten Fluidströme voneinander sowie eine Dichtheit nach außen gewährleisten. Zwischen den Endplatten und dem Stapel von Einzel-Brennstoffzellen befindet sich jeweils ein Stromabnehmer (meist aus Kupfer bestehend), der den elektrischen Strom aller Einzel-Brennstoffzellen sammelt und vom Brennstoffzellenstapel/Stack ableitet. Zumeist ist der Stromabnehmer gegenüber der benachbarten Endplatte durch eine Isolationsschicht getrennt, welche den Stromabnehmer von der Endplatte insbesondere dann, wenn diese nicht aus einem elektrischen Isolationsmaterial besteht, elektrisch und thermisch isoliert.

Eine übliche PEM-Brennstoffzelle (= Niedertemperatur-Protonenaustauschmembran-Brennstoffzelle) hat eine ideale Betriebstemperatur zwischen 60 und 80 °C. Wenn die Temperatur, bei der die chemische Reaktion in den Einzel-Brennstoffzellen gestartet wird, deutlich darunter liegt, sinkt die Leistung des gesamten Brennstoffzellenstapels stark ab. Um schnell akzeptable Leistungswerte zu erreichen, muss daher die Temperatur der Einzel-Brennstoffzellen bei einem Kaltstart möglichst schnell angehoben werden. Die thermische Masse der in einer Brennstoffzelle vorhandenen Bipolarplatten und der Membran-Elektroden-Einheit ist gering, wodurch die Einzel-Brennstoffzellen an sich eigentlich verhältnismäßig schnell erwärmt werden können. Die Stromabnehmer am Ende des Brennstoffzellenstapels haben jedoch eine sehr hohe thermische Masse bzw. Wärmekapazität, so dass eine größere Wärmeenergie bzw. Wärmemenge notwendig ist, um diese zu erwärmen. Die thermische Energie zur Erwärmung des Stromabnehmers wird im Stand der Technik von den direkt an diesen anliegenden Einzel-Brennstoffzellen und wenigen zu letzteren benachbarten Einzel-Brennstoffzellen aufgebracht, weshalb sich die in den Endbereichen des Brennstoffzellenstapels befindenden Einzel-Brennstoffzellen selbst ebenfalls nur langsam erwärmen, da eine direkte Kopplung des Stromflusses über den Stromabnehmer und die Wärmekapazität des Stromabnehmers besteht. Durch die Reihenschaltung der Einzel-Brennstoffzellen wirkt sich die aus der langsamen Erwärmung resultierende geringe Leistungsfähigkeit der (relativ wenigen) Einzel-Brennstoffzellen in den Endbereichen des Stacks allerdings negativ auf die Stromerzeugungsbilanz des gesamten Brennstoffzellenstapels aus. Dadurch ist die abgreifbare elektrische Leistung bei einem Kaltstart des Brennstoffzellenstapels/Stacks erst nach einigen Minuten auf einem akzeptablen Niveau. Diese hohe Anlaufzeit ist bei einer mobilen Anwendung - beispielsweise in einem Kraftfahrzeug - unerwünscht. Die US2010/0248058 A1, DE 10 2004 013 256 A1 und DE 103 37 898 A1 zeigen nicht die hier offenbarte Latentwärmespeicheranordnung, Ausgehend von diesem Stand der Technik ist es daher Aufgabe der vorliegenden Erfindung, ein Brennstoffzellensystem der eingangs genannten Art zu schaffen, das mit einfachen Mitteln relativ schnell auf eine günstige Betriebstemperatur erwärmt werden kann. Diese Aufgabe wird bei einem Brennstoffzellensystem nach Anspruch 1 gelöst.

Aufgrund der erfindungsgemäßen Ausgestaltung kann das Brennstoffzellensystem im Falle eines Kaltstarts unter Abgabe von Wärme aus einem Wärmespeicher an den/die Stromabnehmer mit relativ einfachen Mitteln unter hohem Wirkungsgrad schnell auf eine günstige Betriebstemperatur erwärmt werden, wenn die im erfindungsgemäß vorgesehenen Wärmespeicher des Stacks während eines vorhergehendes Betriebs des Brennstoffzellensystems gespeicherte in diesem Betrieb anfallende quasi überschüssige thermische Energie aus dem in den Einzel-Brennstoffzellen erfolgenden Energiewandlungsprozess nach Stillsetzen und Abkühlen des Stacks bei einem nächsten Start aus diesem Wärmespeicher insbesondere an den Stromabnehmer abgegeben werden kann und somit zu einer beschleunigten Erwärmung des Stromabnehmers beitragen kann. Vorzugsweise erfolgt die Wärmeabgabe aus dem Wärmespeicher gesteuert, während das Beladen desselben selbsttätig erfolgen kann. Besonders vorteilhaft ist es dabei, wenn jedem der beiden Stromabnehmer ein Wärmespeicher zugeordnet ist.

Wärmeverluste des Wärmespeichers werden besonders gering gehalten, wenn der Wärmespeicher in einer Ausnehmung einer Isolationsplatte angeordnet ist, welche zwischen der Endplatte und dem Stromabnehmer angeordnet ist. Die Unteransprüche beinhalten vorteilhafte Weiterbildungen und Ausgestaltungen der Erfindung.

Falls der Wärmespeicher im Wärmeaufnahmeprozess und Wärmeabgabeprozess systembedingt einer Volumenänderung unterliegt, kann gemäß einer weiteren Ausgestaltung ein geeignetes Ausgleichsreservoir für solche Volumenänderungen des Wärmespeichers vorgesehen sein. Letzteres kann vorteilhafterweise durch eine Faserstruktur oder eine Schaumstruktur gebildet sein, welche sich auch in Zwischenräumen des Wärmespeichers befinden kann.

Der Wärmespeicher enthält vorteilhafterweise ein Material, welches sich in einem geeigneten Temperaturbereich in einem metastabilen Zustand befindet und durch einen Auslösemechanismus auskristallisiert, wie z. B. Salzhydrate, Paraffine oder Zuckeralkohole. Vorzugsweise kommt somit ein Latentwärmespeicher zum Einsatz, wenngleich auch Alternativen hierzu möglich sind, wie thermochemische Speicher oder Sorptionsspeicher u.a..

Was die Auslösung solcher Speicher, d.h. deren Anstoßen zur Abgabe von gespeicherter Wärme betrifft, so kann diese durch unterschiedlichste geeignete und dem Fachmann bekannte Mechanismen erfolgen. Als ein Beispiel für solche Auslöse-Mechanismen kann bspw. das Prinzip des sog "Cold Finger" (ist als Kühlfinger ein Laborausrüstungsteil zur Generierung einer gekühlten Oberfläche) genutzt werden, wonach eine Kältezufuhr in das Speichermaterial ein Auslösen des Wärmespeichers bewirkt. Beispielsweise kann hierfür eine geringe Menge von unterkühltem Wasserstoff, welcher in einem Kryotank oder dgl. zur Versorgung des Brennstoffzellensystems gespeichert ist, zur Auslösung des Wärmespeichers genutzt, d.h. bei einem beabsichtigten Kaltstart des Brennstoffzellensystems entweder gezielt durch den Wärmespeicher hindurch geführt werden oder es kann die Kälte von aus dem Kryotank oder dgl. entnommenen Wasserstoff auf andere geeignete Weise an den Wärmespeicher gekoppelt, d.h. anteilig an diesen übertragen werden. Alternativ kann eine gezielte Veränderung eines Strömungsquerschnitts bspw. in einer Wasserstoff-Zufuhrleitung zum Stack als Auslöser für den (Latent)-Wärmespeicher verwendet werden, da bekanntlich Fluide ihre Temperatur in Abhängigkeit von ihrer Strömung durch gewisse Leitungen ändern, so dass durch eine gezielte Querschnitts-Veränderung ein Abkühlen dieser Leitung bewirkt werden kann, welches dann als Auslösemechanismus für den Latent-Wärmespeicher herangezogen wird, insbesondere indem diese Leitung bzw. ein entsprechender Leitungs-Zweig durch den Wärmespeicher hindurch geführt ist. Selbstverständlich ist dieses Prinzip nicht auf Wasserstoff als hierfür verwendetes Fluid beschränkt.

Als weiteres Beispiel für ein solches Auslöse-Prinzip durch Quasi-Unterkühlen des Wärmespeichers kann das Entladen eines kleinen Wasserstoff-Metallhydridspeichers, welcher im thermischen Kontakt mit dem Latent-Wärmespeicher steht, genannt werden. Dabei kann durch ein Ventil der Druck des Wasserstoffs im Metallhydridspeicher abgebaut werden, wodurch in/an diesem Kälte generiert wird, die wiederrum dem Latent-Wärmespeicher für dessen Auslösung bspw. über einen geeigneten Wärmeleiter zugeführt wird.

Als weitere Beispiele für möglich Auslöse-Mechanismen für Wärmespeicher, insbesondere Latent-Wärmespeicher, kann ein sog. "Knackfrosch" (= Schnappscheibe oder vergleichbares verschiedene Formen einnehmendes Metallplättchen) genannt werden; alternativ ist beispielsweise auch eine Auslösung über Ultraschall oder über ein elektrisch beaufschlagtes Peltierelement möglich. Mit solchen oder anderen geeigneten Auslöse-Mechanismen ist es möglich, den Wärmespeicher bei einem Kaltstart des Brennstoffzellensystems gezielt zu aktivieren, so dass dieser die in einem vorhergehenden Betrieb des Brennstoffzellensystems gespeicherte Wärme an den Stromabnehmer abgibt.

Mit der soweit erläuterten erfindungsgemäßen Lösung ergeben sich folgende Vorteile: Die Idealleistung des Brennstoffzellenstapels wird wesentlich schneller erreicht. Die mögliche Temperatur für einen überhaupt durchführbaren Kaltstart ist erheblich niedriger als bei einem Brennstoffzellenstapel ohne einen solchen Wärmespeicher. Die Einzel-Brennstoffzellen, insbesondere die äußeren Einzel-Brennstoffzellen, haben eine höhere Lebensdauer, da eine Eisbildung in den Poren von deren Membranen durch die schnellere Temperaturzunahme verringert wird. Möglicherweise gefrorene Wassermoleküle könnten nämlich durch ihre Volumenvergrößerung beim Übergang vom flüssigen zum gefrorenen Zustand die Struktur der Membran zumindest partiell zerstören, wodurch die Leitfähigkeit der Membran stark verringert würde.

Gemäß einer weiteren möglichen Weiterbildung der vorliegenden Erfindung kann eine Segmentierung des oder der Wärmespeicher, bspw. Latentwärmespeicher, vorgesehen sein, dahingehend dass diese(r) in mehrere, zumindest zwei Unter-Einheiten aufgeteilt ist, von denen jede einzeln mittels eines Auslöse-Mechanismus ausgelöst werden kann, wobei die Auslösung der verschiedenen Speicher-Einheiten vorzugsweise zu unterschiedlichen Zeitpunkten erfolgt. Damit kann der Erwärmungsprozess des jeweiligen Stromabnehmers gezielt gesteuert werden, wobei die Wärmeleistung der einzelnen Unter-Einheiten des/der Wärmespeicher(s) solchermaßen voneinander abweichen können, dass die an den jeweiligen Stromabnehmer bzw. an die diesem benachbarten Einzel-Brennstoffzellen abgegebene Wärmemenge gezielt eingestellt werden kann.

Im Übrigen können dabei auch unterschiedliche Typen von Wärmespeichern miteinander kombiniert vorgesehen sein, da auch damit eine Abbildung von unterschiedlicher Wärmeleistungsabgabe in verschiedenen Bereichen des Stromabnehmers und/oder unterschiedliche Auslösetemperaturen zum Überlagern des jeweiligen Temperaturgradienten dargestellt werden können. Darstellbar sind somit unterschiedliche Auslösezeitpunkte, unterschiedliche Auslösetemperaturen, unterschiedliche Wärmeabgabemengen, etc., um bei einem Startvorgang des Brennstoffzellensystems bei unterschiedlichen aktuellen Ist-Temperaturen des Stacks die jeweils bestmögliche Aufheiz-Strategie abbilden zu können. Vorzugsweise sollte dabei angestrebt werden, das Aufwärm-Verhalten einer sich in der Mitte des Stacks befindenden Einzel-Brennstoffzelle nachzubilden.
Weiterhin kann neben einem erfindungsgemäß vorgesehenen Wärmespeicher noch eine andere weitere gezielt aktivierbare Wärmequelle für den Brennstoffzellenstapel und insbesondere für den/die Stromabnehmer desselben vorgesehen sein. Beispielsweise kann zusätzlich eine elektrische Heizleitung vorgesehen sein, oder es kann eine quasi hinzu schaltbare Wärmequelle durch eine Wärmepumpe oder auch einen Metallhydridspeicher gebildet sein.

Weitere Einzelheiten, Merkmale und Vorteile der Erfindung ergeben sich aus der nachfolgenden Beschreibung anhand der Zeichnungen. Es zeigt:
- Figur 1: einen Querschnitt durch einen erfindungsgemäß ausgestalteten Brennstoffzellenstapel,
- Figur 2: ein Spannungsdiagramm eines Brennstoffzellenstapels gemäß dem Stand der Technik ohne Wärmespeicher, und
- Figur 3: ein Spannungsdiagramm eines Brennstoffzellenstapels gemäß der Erfindung mit Wärmespeicher.

In den Figuren sind dabei nur die hier interessierenden Teile des Brennstoffzellensystems dargestellt, alle übrigen Elemente sind der Übersichtlichkeit halber weggelassen.

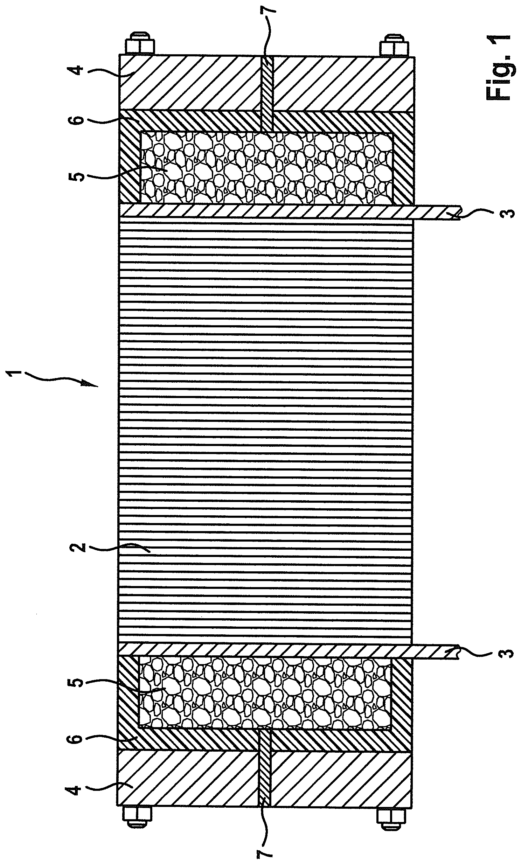

Gemäß Figur 1 besteht das erfindungsgemäße Brennstoffzellensystem aus mehreren, zu einem Brennstoffzellenstapel 1 oder Stack 1 zusammengefassten (und dabei aufeinander gestapelten) Einzel-Brennstoffzellen 2, wobei der Stapel von Einzel-Brennstoffzellen 2 an jedem Ende von einem Stromabnehmer 3 begrenzt ist, an dessen den Einzel-Brennstoffzellen abgewandten Seite eine Endplatte 4 vorgesehen ist. Vorliegend ist zwischen dem jeweiligen Stromabnehmer 3 und der jeweiligen Endplatte 4 noch eine Isolationsplatte 6 vorgesehen.

Am Stromabnehmer 3 liegt weiterhin an der den Einzel-Brennstoffzellen 2 abgewandten Seite ein Wärmespeicher 5 an, der vorliegend in einer Ausnehmung der Isolationsplatte 6 angeordnet ist. Dieser Wärmespeicher 5 ist als Latentwärmespeicher (mit Phasenwechselmaterial PCM) ausgeführt oder kann durch einen Sorptionsspeicher (bspw. mit Zeolith) gebildet sein. Da je nach verwendetem Material oder Aufbau der Wärmespeicher 5 bei Wärmeaufnahme bzw. Wärmeabgabe eine Volumenänderung erfahren kann, kann ein Ausgleichsreservoir (nicht gezeigt) für eine Volumenänderung des Wärmespeichers 5 vorgesehen sein. Dieses wird vorteilhafterweise von einer Faser- oder Schaumstruktur gebildet, welche sich in Zwischenräumen des Wärmespeichers 5 befindet.

Ein geeigneter, hier lediglich abstrakt dargestellter Auslösemechanismus 7, mit welchem gesteuert eine Wärmeabgabe aus dem Wärmespeicher in Gang gesetzt werden kann, bspw. indem eine Kristallisation des Materials im Wärmespeicher 5 und damit eine Abgabe der zuvor im Wärmespeicher gespeicherten und enthaltenen Wärme ausgelöst wird, kann durch die Isolationsplatte 6 und die Endplatte 4 hindurch geführt sein und nach einem der mehreren vor der Figurenbeschreibung erläuterten Prinzipien oder anderweitig funktionieren.

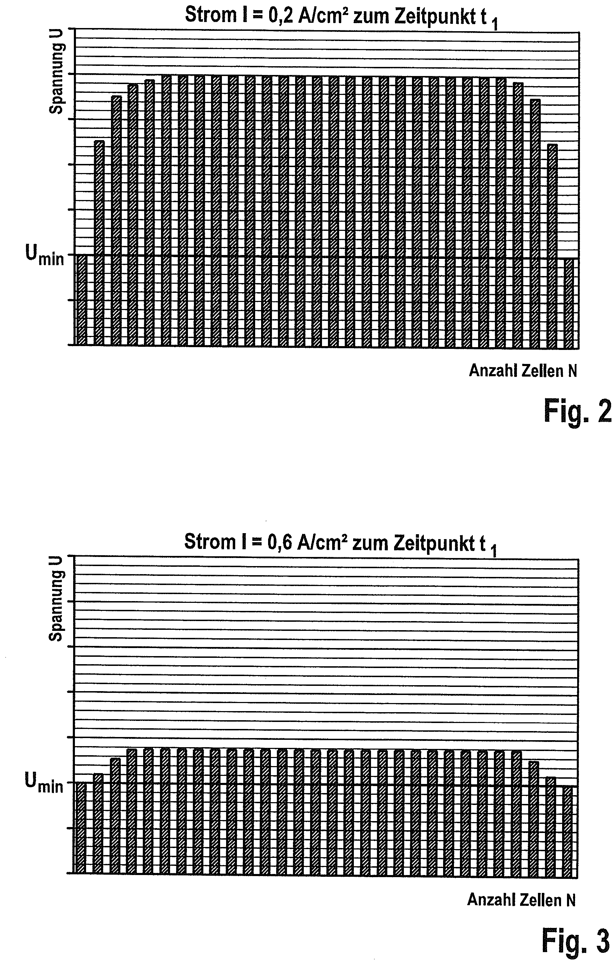

Figur 2 zeigt ein elektrisches Spannungsdiagramm eines Brennstoffzellensystems ohne erfindungsgemäß vorgesehenem Wärmespeicher zu einem Zeitpunkt t₁ kurz nach einem Kaltstart des Brennstoffzellensystems, wobei auf der Abszisse die jeweiligen Einzel-Brennstoffzellen (2) ("Anzahl Zellen N") als Balken angeführt sind, deren elektrischer Spannungswert ("Spannung U") in Form der Höhe des jeweiligen Balkens auf der Ordinate aufgetragen ist, wenn ein elektrischer Strom in Höhe von 0,2 Ampere pro Flächeneinheit (cm²) der jeweiligen Einzel-Brennstoffzelle abgezogen wird. Dabei ist zu erkennen, dass die beiden äußeren Einzel-Brennstoffzellen, nämlich die in diesem Spannungsdiagramm am weitesten links und die in diesem Spannungsdiagramm am weitesten rechts liegende Einzel-Brennstoffzelle, eine erheblich geringere elektrische elektrische Spannung aufweisen als die zwischen diesen beiden Einzel-Brennstoffzellen liegenden Einzel-Brennstoffzellen. Die Höhe bzw. Größe des gesamthaft vom Brennstoffzellenstapel bereitgestellten bzw. abgezogenen elektrischen Stroms wird aber bekanntlich stets an diejenige Einzel-Brennstoffzelle mit dem niedrigsten Spannungsniveau angepasst, wobei eine minimale elektrische Spannung Uₘᵢₙ ausschlaggebend ist, die nicht unterschritten werden sollte, damit der Brennstoffzellenstapel möglichst wenig lebensdauerkritisch anläuft. Man erkennt somit, dass hier die beiden äußersten Einzel-Brennstoffzellen den limitierenden Faktor des gesamten Brennstoffzellenstapels bilden, während die demgegenüber höhere elektrischen Spannung in den mittleren Einzel-Brennstoffzellen quasi ungenutzt bleibt.

Figur 3 zeigt ein vergleichbares Spannungsdiagramm für den ansonsten gleichen Brennstoffzellenstapel, nun jedoch mit einem erfindungsgemäß vorgesehenem Wärmespeicher (5) an jedem Stromabnehmer (3). Auch hier wurde der Brennstoffzellenstapel kalt gestartet und man erkennt, dass zum gleichen Zeitpunkt t₁ die Unterschiede in der elektrischen Spannung U zwischen den beiden äußeren Einzel-Brennstoffzellen und den dazwischen angeordneten mittleren Einzel-Brennstoffzellen erheblich geringer sind. Damit kann ein stärkerer elektrischer Strom pro Flächeneinheit jeder Einzel-Brennstoffzelle abgegriffen werden, in diesem Fall 0,6 A/cm². Somit ist die elektrische Leistung des Brennstoffzellenstapels mit erfindungsgemäßem Wärmespeicher (5) in der Anlaufphase des Brennstoffzellenstapels dreimal so hoch wie beim ansonsten gleichen Brennstoffzellenstapel ohne Wärmespeicher. Da beim erfindungsgemäß mit zumindest einem, vorzugsweise zwei Wärmespeichern (5) ausgerüstetem Brennstoffzellenstapel, dessen Stromabnehmer (3) bei einem Kaltstart durch den jeweiligen Wärmespeicher (5) erwärmt werden, als Verlustleistung entstehende Wärme in den mittleren Einzel-Brennstoffzellen (2) während der Anlaufphase des Brennstoffzellensystems höher ist als bei einem sonst gleichen Brennstoffzellensystem ohne Wärmespeicher, trägt diese Abwärme der mittleren Einzel-Brennstoffzellen (2) entscheidend zu einem m schnelleren Aufwärmprozess des Brennstoffzellenstapels bei, welcher schnellere Aufwärmprozess bis zu fünfmal schneller erfolgt als bei einem gleichen Brennstoffzellenstapel ohne erfindungsgemäß vorgesehenem Wärmespeicher. Das vorbeschriebene Brennstoffzellensystem kann dabei vorzugsweise in einem Kraftfahrzeug Verwendung finden und es sei darauf hingewiesen, dass die vorhergehende Beschreibung der vorliegenden Erfindung nur zu illustrativen Zwecken und nicht zum Zwecke der Beschränkung der Erfindung dient. Im Rahmen der Erfindung sind verschiedene Änderungen und Modifikationen möglich, ohne den Umfang der Erfindung sowie ihrer Äquivalente zu verlassen.

## Patentansprüche

1. Brennstoffzellensystem mit mehreren, zu einem Brennstoffzellenstapel zusammengefassten Einzel-Brennstoffzellen (2) sowie zwei sich an die beiden endseitigen Einzel-Brennstoffzellen anschließenden Stromabnehmern (3), an welche sich jeweils unter Zwischenlage einer Isolationsplatte (6) eine Endplatte (4) anschließt, **dadurch gekennzeichnet, dass** zumindest an einem der Stromabnehmer (3) an seine den Einzel-Brennstoffzellen (2) abgewandte Seite angrenzend ein Wärmespeicher (5) vorgesehen ist, und wobei der Wärmespeicher (5) in einer Ausnehmung der Isolationsplatte (6) angeordnet ist.

2. Brennstoffzellensystem nach Anspruch 1, wobei das Brennstoffzellensystem derart ausgebildet ist, dass im Betrieb anfallende thermische Energie aus dem in den Einzel-Brennstoffzellen erfolgenden Energiewandlungsprozess nach Stillsetzen und Abkühlen des Stacks bei einem nächsten Start zur beschleunigten Erwärmung des Stromabnehmers aus dem Wärmespeicher an den Stromabnehmer abgebbar ist.

3. Brennstoffzellensystem nach einem der vorhergehenden Ansprüche, wobei ein Ausgleichsreservoir für eine Volumenänderung des Wärmespeichers (5) vorgesehen ist.

4. Brennstoffzellensystem nach Anspruch 3, wobei das Ausgleichsreservoir durch eine Faser- oder Schaumstruktur gebildet ist, welche sich in Zwischenräumen des Wärmespeichers (5) befindet.

5. Brennstoffzellensystem nach einem der vorhergehenden Ansprüche, wobei der Wärmespeicher (5) ein Material enthält, welches sich in einem geeigneten Temperaturbereich in einem metastabilen Zustand befindet und durch einen Auslösemechanismus (7) auskristallisiert, wie z. B. Salzhydrate, Paraffine oder Zuckeralkohole.

6. Brennstoffzellensystem nach einem der vorhergehenden Ansprüche, wobei der Wärmespeicher (5) als Latentwärmespeicher oder thermochemischer Speicher oder als Sorptionsspeicher ausgeführt ist.

7. Brennstoffzellensystem nach einem der vorhergehenden Ansprüche, wobei ein Auslösemechanismus (7) für eine Abgabe von Wärme aus dem Wärmespeicher (5) durch geeignete Kältezufuhr, beispielsweise mittels eines Cold-Fingers, oder ein Peltierelement oder einem Knackfrosch oder dgl. gebildet ist oder durch Ultraschall erfolgt.

8. Brennstoffzellensystem nach einem der vorhergehenden Ansprüche, wobei am Stromabnehmer verschiedene Unter-Einheiten von Wärmespeichern vorgesehen sind.

9. Brennstoffzellensystem nach einem der vorhergehenden Ansprüche, wobei neben dem Wärmespeicher eine weitere Wärmequelle am Stromabnehmer vorgesehen ist.

10. Kraftfahrzeug mit einem Brennstoffzellensystem nach einem der vorhergehenden Ansprüche.

## Claims

1. A fuel cell system, comprising a plurality of individual fuel cells (2) combined to form a fuel cell stack, and two current collectors (3), which adjoin the two end-side individual fuel cells and which are each adjoined by an end plate (4), with an isolation plate (6) arranged in-between, **characterised in that** a heat accumulator (5) is provided adjacently to at least one of the current collectors (3) on the side thereof which faces away from the individual fuel cells (2), and wherein the heat accumulator (5) is arranged in a recess in the isolation plate (6).

2. A fuel cell system according to claim 1, wherein the fuel cell system is formed in such a way that thermal energy generated during operation by an energy conversion process taking place in the individual fuel cells is, after a shutdown and cooling of the fuel cell stack, releasable from the heat accumulator to the current collector upon a subsequent start for the purpose of accelerated heating of the current collector.

3. A fuel cell system according to any one of the preceding claims, wherein a compensation reservoir for accommodating a change in volume of the heat accumulator (5) is provided.

4. A fuel cell system according to claim 3, wherein the compensation reservoir is formed by a fibrous or foamed structure situated in intermediate spaces of the heat accumulator (5).

5. A fuel cell system according to any one of the preceding claims, wherein the heat accumulator (5) contains a material present in a metastable state in a suitable temperature range, said material being caused to crystallise by a triggering mechanism (7), for example salt hydrates, paraffins, or sugar alcohols.

6. A fuel cell system according to any one of the preceding claims, wherein the heat accumulator (5) is a latent heat accumulator, or a thermochemical accumulator or a sorption accumulator.

7. A fuel cell system according to any one of the preceding claims, wherein a triggering mechanism (7) for the release of heat from the heat accumulator (5) is formed by a suitable a cold supply, for example by means of a cold finger, or a Peltier element, or a clicker, or the like, or is provided by ultrasound.

8. A fuel cell system according to any one of the preceding claims, wherein various sub-units of heat accumulators are provided on the current collector.

9. A fuel cell system according to any one of the preceding claims, wherein a further heat source is provided on the current collector in addition to the heat accumulator.

10. A motor vehicle with a fuel cell system according to any one of the preceding claims.

## Revendications

1. Système de cellules électrochimiques (1) comprenant plusieurs cellules électrochimiques individuelles (2) assemblées en une pile de cellules électrochimiques ainsi que deux collecteurs, de courant (3) se connectant sur les deux cellules électrochimiques individuelles terminales, sur lesquelles se connecte respectivement une plaque d'extrémité (4) avec interposition d'une plaque isolante (6),
**caractérisé en ce qu'**
il est prévu un accumulateur thermique (5), au moins sur l'un des collecteurs de courant (3), adjacent à son côté situé à l'opposé des cellules électrochimiques individuelles (2) et l'accumulateur thermique (5) est monté dans un évidemment de la plaque isolante (6).

2. Système de cellules électrochimiques (1) conforme à la revendication 1,
réalisé de sorte que de l'énergie thermique produite en fonctionnement par le procédé de transformation d'énergie mis en oeuvre dans les cellules électrochimiques individuelles, puisse être, après arrêt et refroidissement de la pile, lors d'un démarrage ultérieur, extraite de l'accumulateur thermique, et délivrée au collecteur de courant pour accélérer son chauffage.

3. Système de cellules électrochimiques conforme à l'une des revendications précédentes,
dans lequel il est prévu un réservoir d'équilibrage pour permettre une modification du volume de l'accumulateur thermique (5).

4. Système de cellules électrochimiques conforme à la revendication 3,
dans lequel le réservoir d'équilibrage est formé par une structure fibreuse ou sous forme de mousse qui est située dans des volumes intermédiaires de l'accumulateur thermique (5).

5. Système de cellules électrochimiques conforme à l'une des revendications précédentes,
dans lequel l'accumulateur thermique (5) renferme un matériau qui se trouve dans un état métastable, dans une plage de température adaptée, et est cristallisé par un mécanisme de déclenchement (7), tel que par exemple un hydrate salin de la paraffine ou des alcools de sucre.

6. Système de cellules électrochimiques conforme à l'une des revendications précédentes,
dans lequel l'accumulateur thermique (5) est réalisé sous la forme d'un accumulateur de chaleur latente ou d'un accumulateur thermochimique ou d'un accumulateur de sorption.

7. Système de cellules électrochimiques conforme à l'une des revendications précédentes,
dans lequel un mécanisme de déclenchement (7) permettant de délivrer de la chaleur à partir de l'accumulateur thermique (5) est formé par une introduction de frigories adaptée, par exemple au moyen d'un doigt froid, ou d'un élément Peltier, ou d'un clicker ou similaire, ou effectuée par ultrasons.

8. Système de cellules électrochimiques conforme à l'une des revendications précédentes,
**caractérisé en ce qu'**
il est prévu sur le collecteur de courant différente sous unité d'accumulateurs thermiques.

9. Système de cellules électrochimiques conforme à l'une des revendications précédentes,
dans lequel il est prévu outre l'accumulateur thermique une autre source de chaleur sur le collecteur de courant.

10. Véhicule équipé d'un système de cellules électrochimiques conforme à l'une des revendications précédentes.
